# EUROPEAN PATENT APPLICATION

(11) **EP 3 522 346 A1**
(43) Date of publication of application: **07.08.2019**
(21) Application number: 19155357.7
(22) Date of filing: 04.02.2019
(51) Int. Cl.: H02K 21/18, A01K 63/04, H02K 47/20, H02K 5/10, H02K 1/14, H02K 5/04, H02K 11/00, H02K 16/00, A01K 63/06

(54) **POWER GENERATION APPARATUS AND AQUARIUM EQUIPMENT COMPRISING THE POWER GENERATION APPARATUS**

(30) Priority: 06.02.2018 CN 201810117770; 06.02.2018 CN 201820206113 U; 26.03.2018 CN 201820412366 U; 26.03.2018 CN 201820412384 U
(71) Applicant: Guangdong Boyu Group Co., Ltd, Raoping County Chaozhou Guangdong 515700 (CN)
(72) Inventor: Yu, Youkai, Chaozhou City, Guangdong 515700 (CN); Yu, Bingyan, Chaozhou City, Guangdong 515700 (CN); Yu, Jianqin, Chaozhou City, Guangdong 515700 (CN)
(74) Representative: DREISS Patentanwälte PartG mbB

(57) **Abstract**

Provided are a power generation apparatus (100) and an aquarium equipment including the power generation apparatus (100). The power generation apparatus (100) includes a water pump (1) and a power generation induction coil (2). The water pump (1) includes a stator (3), a rotor assembly (4), and an impeller (5). The rotor assembly (4) is coupled to the impeller (5), the stator (3) includes a U-shaped iron core (301) and a coil winding (302) wound around the U-shaped iron core (301). The coil winding (302) is operative to be coupled to an external power source. The rotor assembly (4) includes a rotating shaft (401) and a permanent magnet rotor (402) coupled to the rotating shaft (401). The power generation induction coil (2) is wound around an exterior of the permanent magnet rotor (402) and coupled to an electric device. The permanent magnet rotor (402) is disposed at an open end of the U-shaped iron core (301). When the coil winding (302) is energized, the permanent magnet rotor (402) rotates relative to the power generation induction coil (2) enabling the power generation induction coil (2) to generate an induced current to power up the electric device.

## Description

### TECHNICAL FIELD

The present invention relates to the technical field of aquarium devices, for example, relates to a power generation apparatus and an aquarium equipment including the power generation apparatus.

### BACKGROUND

A water pump is usually mounted in an aquarium for pumping water. The water pump includes a housing, which includes a pump house, a stator chamber and a rotor chamber. An impeller is mounted in the pump house, a stator is mounted in the stator chamber, and a permanent magnet rotor is mounted in the rotor chamber. The permanent magnet rotor is fixedly coupled to the impeller by a rotating shaft, or directly fixedly coupled to the impeller. A rotating shaft is arranged at an axis of the rotor. The stator, after energized, drives the rotor to rotate, thereby driving the impeller to rotate and further achieving the purpose of pumping water under the action of the pump house.

However, the above-mentioned water pump only serves the function of pumping water, and other low-power electric devices such as a lamp in the aquarium need to be supplied power separately. Mainly there are two ways of supplying power thereto. The first one is connect the electric devices to an external power source by a conductive wire. The second one is supply power to the electric devices with a battery. When the first power supply method is adopted, multiple power cables would be required between the water pump and the electric device, and safety hazards such as electric leakage can easily occur. When the second power supply method is adopted, the battery needs to be replaced when it runs out of power, which is troublesome.

### SUMMARY

The present invention provides a power generation apparatus that is capable of supplying power to an electrical device while pumping water at the same time.

The present invention provides an aquarium equipment, which is convenient to use and operate. An embodiment provides a power generation apparatus, including a water pump and a power generation induction coil. The water pump includes a stator, a rotor assembly and an impeller. The rotor assembly is coupled to the impeller. The stator includes a U-shaped iron core and at least one coil winding wound around the U-shaped iron core. The coil winding is operative to be coupled to an external power source. The rotor assembly includes a rotating shaft and a permanent magnet rotor coupled to the rotating shaft. The power generation induction coil is wound around an exterior of the permanent magnet rotor and coupled to an electric device. The permanent magnet rotor is disposed at an open end of the U-shaped iron core, and in response to the coil winding being energized, the permanent magnet rotor is operative to rotate relative to the power generation induction coil enabling the power generation induction coil to generate an induced current to power up the electric device.

In an embodiment, the water pump further includes a housing in which the stator, the rotor assembly and the impeller are all mounted.

In an embodiment, the housing is provided with a stator chamber, a rotor chamber and a pump house. The stator chamber is isolated from the rotor chamber. The stator is disposed in the stator chamber, the rotor chamber is communicated with the pump house, the rotor assembly is disposed in the rotor chamber, the impeller is disposed in the pump house, the housing is provided with a water inlet and a water outlet, and the water inlet and the water outlet are communicated with the pump house.

In an embodiment, the water pump includes a housing, a stator chamber and a rotor chamber. The rotor chamber is disposed in the housing. A pump house communicated with the rotor chamber is further disposed in the housing, the rotor assembly is disposed in the rotor chamber, the impeller is disposed in the pump house, the housing is provided with a water inlet and a water outlet, and the water inlet and the water outlet are communicated with the pump house.

The stator chamber is defined in a tank of an aquarium equipment. A wall of the tank is recessed inward the tank to define the stator chamber. The stator chamber is not communicated with an interior of the tank. The housing is detachably disposed in the tank and corresponds to the stator chamber in position.

In an embodiment, the stator chamber includes an annular first side wall and a first bottom wall. The first bottom wall is recessed inward the tank to define two iron core receiving chambers. Each of both ends of the U-shaped iron core that protrude out of the coil winding is an iron core protrusion, wherein the iron core protrusions are inserted into the iron core receiving chambers.

In an embodiment, the U-shaped iron core includes two first iron cores arranged in parallel and a second iron core connected to one end of the first iron cores . The two first iron cores are each wound with the coil winding, and the end of each of the two first iron cores facing away from the second iron core protrudes out of a side face of the coil winding that is adjacent to the rotor assembly to form an iron core protrusion. The permanent magnet rotor and the power generation induction coil are disposed between two iron core protrusions.

In an embodiment, the U-shaped iron core includes two first iron cores arranged in parallel and a second iron core connected to one end of the first iron cores. The two first iron cores are each wound with the coil winding, and an end face of the end of each of the first iron cores facing away from the second iron core is adjacent to or flush with a side face of the coil winding that is adjacent to the rotor assembly. The permanent magnet rotor and the power generation induction coil are disposed outside the open end of the U-shaped iron core.

In an embodiment, an axis of the permanent magnet rotor is parallel to a winding plane of the power generation induction coil.

In an embodiment, the power generation induction coil includes a first power generation induction coil and a second power generation induction coil that are spaced apart from each other. The winding plane of the first power generation induction coil runs parallel to the winding plane of the second power generation induction coil. And the first power generation induction coil and the second power generation induction coil are symmetrically disposed relative to the axis of the permanent magnet rotor.

In an embodiment, the water pump includes a housing, an electric device includes a lamp which is fixed to the housing; or
the lamp and the water pump are spaced apart from each other.

In an embodiment, an outer side of one of the side walls of the housing is provided with a suction plate or a mounting base. The lamp is fixedly mounted at the outer side of a side wall of the housing that is not provided with the suction plate or the mounting base.

In an embodiment, the lamp includes a light emitting diode (LED) and a sealing cover that seals the LED. The sealing cover has a light-transmitting region through which light of the LED is transmitted.

An embodiment further provides an aquarium equipment that includes the power generation apparatus.

In an embodiment, the aquarium equipment is an aquarium.

In an embodiment, the aquarium equipment includes a tank. The power generation apparatus is integrally disposed in the tank. A water pump of the power generation apparatus comprises a housing, and a stator, a rotor assembly and an impeller of the power generation apparatus are installed within the housing.

In an embodiment, the aquarium equipment includes a tank. The power generation apparatus comprises a housing, and the rotor assembly and the impeller of the power generation apparatus are installed in the housing. A wall of the tank is recessed inward the tank to define a stator chamber that is not communicated with an interior of the tank. The stator of the power generation apparatus is disposed in the stator chamber. The housing is mounted in the tank and corresponds to the stator chamber in position.

In an embodiment, a filter is detachably mounted at a bottom of the tank and inside the tank. The housing is detachably fixed to a lower end of the filter, and correspondingly, the stator chamber is located at the bottom of the tank.

In an embodiment, the lower end of a filter housing of the filter is insertively fitted with an outer side wall of the stator chamber. The bottom of the filter is recessed inward the filter to define a mounting slot, and the housing is clamped in the mounting slot.

In an embodiment, the pump house includes a pump house body and a pump house cover that are detachably connected to each other. The pump house cover is provided with a water inlet. A side wall of the pump house body directly facing the pump house cover is provided with a through hole communicated with the rotor chamber in a mount housing. A rotating shaft of the rotor assembly passes through the through hole to be coupled to the impeller in the pump house body. An upper portion of the pump house is provided with a water outlet communicated with a water outlet tube.

In an embodiment, the bottom of the tank is detachably provided with a base seat, and the stator is fixed to the base seat.

The beneficial effects of the present invention are as follows. The power generation apparatus of the present invention combines the water pump and the power generation induction coil, and can supply power to the electrical device while pumping water at the same time. Compared with the related art, the power-on/off connection of the electrical device is more convenient and potential safety hazards such as electric leakage which may occur when the power supply device is used alone to supply power to the electrical device may be avoided.

### BRIEF DESCRIPTION OF DRAWINGS

FIG. 1 is a perspective view of a power generation apparatus according to one embodiment;
FIG. 2 is a cross-sectional view of a first perspective of a power generation apparatus according to one embodiment;
FIG. 3 is a cross-sectional view of a second perspective of a power generation apparatus according to one embodiment;
FIG. 4 is a schematic diagram illustrating an internal structure of a power generation apparatus after a first cover is removed according to one embodiment;
FIG. 5 is a schematic diagram illustrating an internal structure of a power generation apparatus after a second cover is removed according to one embodiment;
FIG. 6 is a structural diagram illustrating a power generation apparatus after a cover is removed according to one embodiment;
FIG. 7 is an exploded view of a power generation apparatus according to one embodiment;
FIG. 8 is a perspective view of an aquarium according to another embodiment;
FIG. 9 is a cross-sectional view of a first perspective of an aquarium according to another embodiment;
FIG. 10 is an exploded view of FIG. 2;
FIG. 11 is a cross-sectional view of a second perspective of an aquarium according to another embodiment;
FIG. 12 is a perspective view of a water pump of an aquarium according to another embodiment;
FIG. 13 is a cross-sectional view of a water pump of an aquarium according to another embodiment (a stator is not illustrated);
FIG. 14 is a cross-sectional view of a water pump of an aquarium according to another embodiment (a stator is not illustrated);
FIG. 15 is a perspective view of an aquarium according to another embodiment;
FIG. 16 is a cross-sectional view of a first perspective of an aquarium according to another embodiment;
FIG. 17 is an exploded view of FIG. 16;
FIG. 18 is a cross-sectional view of a second perspective of an aquarium according to another embodiment;
FIG. 19 is an exploded view of FIG. 18;
FIG. 20 is a perspective view of a water pump of an aquarium according to another embodiment;
FIG. 21 is a cross-sectional view of a water pump of an aquarium according to another embodiment (a stator is not illustrated);
FIG. 22 is a cross-sectional view of a water pump of an aquarium according to another embodiment (a stator is not illustrated); and
FIG. 23 is a structural diagram illustrating a base seat of an aquarium according to another embodiment.

In the drawings:

| | | |
|---|---|---|
| 100. Power Generation Apparatus | 1. Water Pump | 2. Power Generation Induction Coil |
| 3. Stator | 301. U-shaped Iron Core | 3011. First Iron Core |
| 3012. Second Iron Core | 3013. Iron Core Protrusion | 3014. Notch |
| 302. Coil Winding | 4. Rotor Assembly | 401. Rotating Shaft |
| 402. Permanent Magnet Rotor | 403. Reel | 5. Impeller |
| 6. Housing | 601. Rotor Chamber | 602. Inlet |
| 603. Outlet | 604. Housing Body | 605. First Cover Body |
| 606. Second Cover Body | 607. Stator Chamber | 608. Pump House |
| 6081. Pump House Cover | 6082. Pump House Body | 609. Partition |
| 610. Water Outlet Tube | 611. Mount Housing | 6111. Arc-shaped Structure |
| 6112. Connecting Portion | 6113. Bent Portion | 6114. Side Wall of the Housing |
| 6115. Bottom Wall of the Housing | 6116. Protruding Block | 612. Iron Core Receiving Chamber |
| 7. Suction Plate | 8. Power Cable | 9. Lamp |
| 200. Tank | 210. Receiving Slot | 300. Filter |
| 310. Filter Housing | 320. Mounting Slot | 400. Base Seat |
| 410. Stator Isolation Chamber | 420. Wire Securing Clip | |

### DETAILED DESCRIPTION

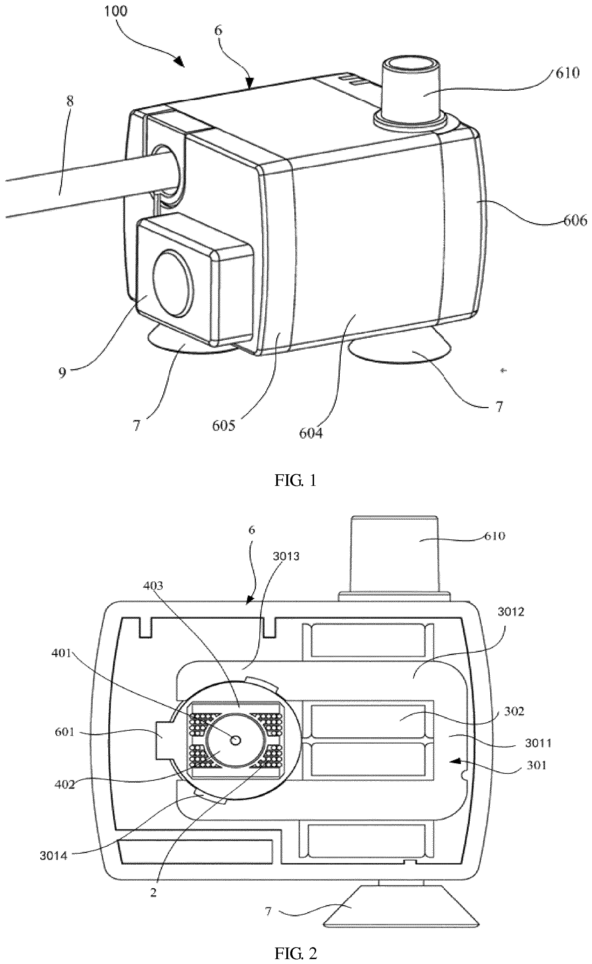

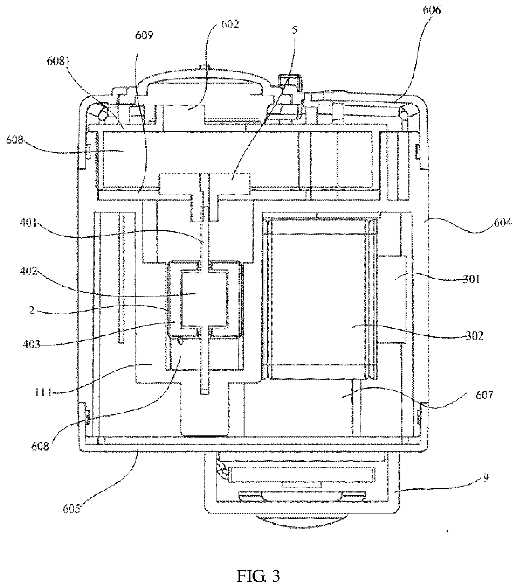

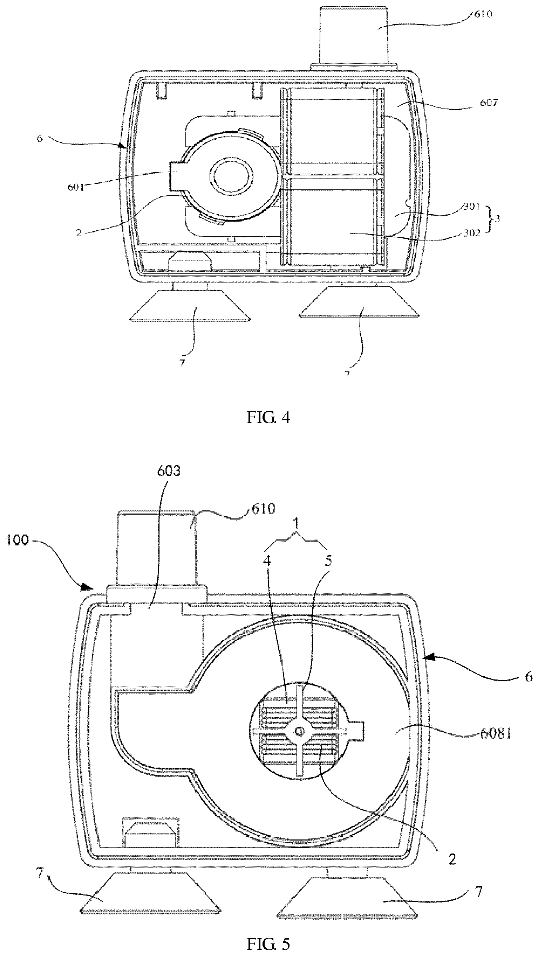

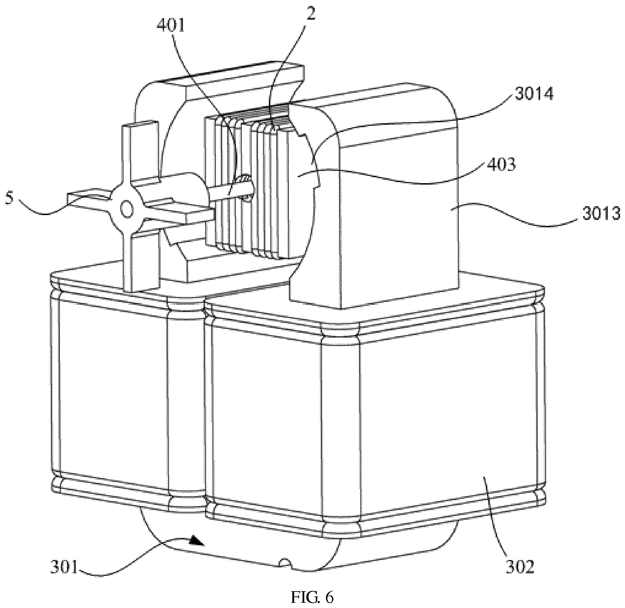

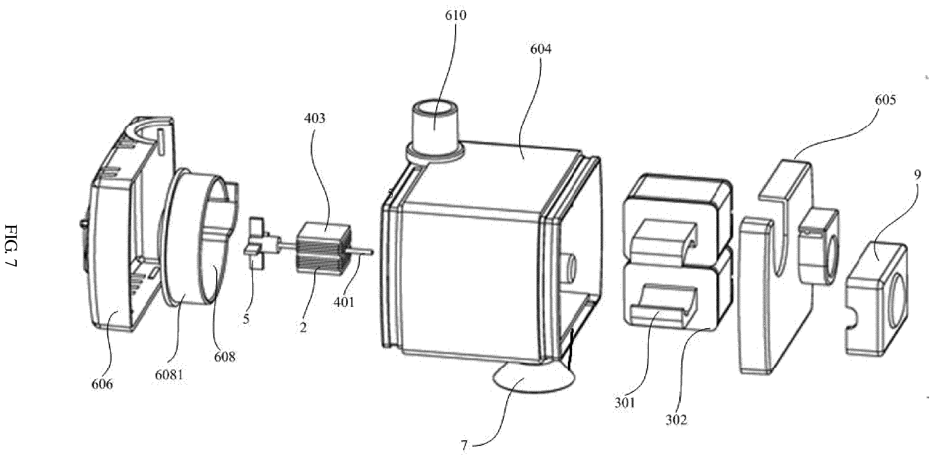

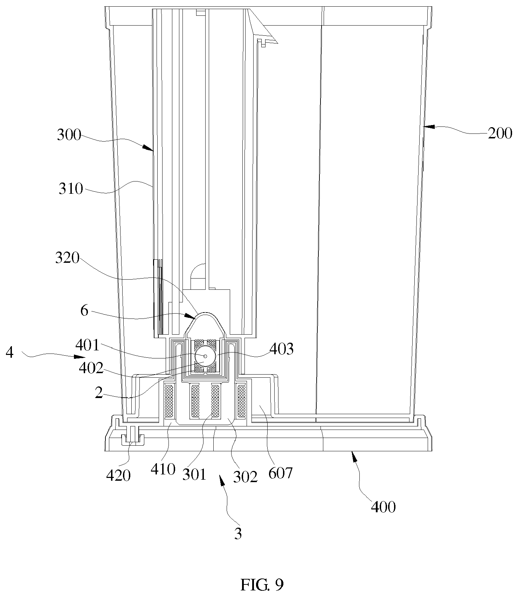

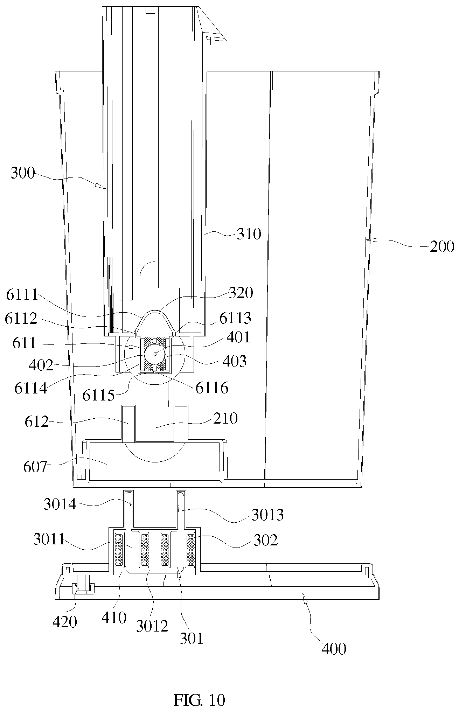

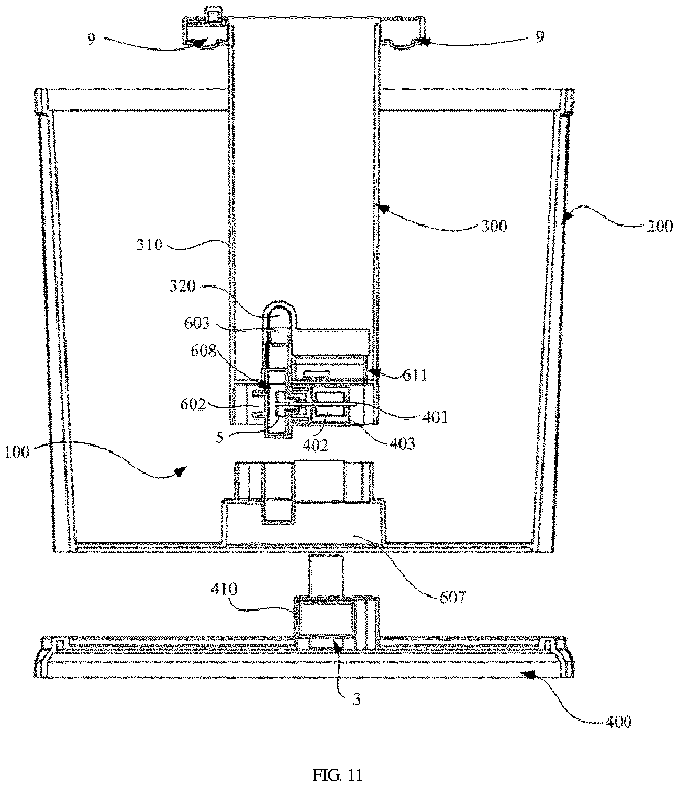

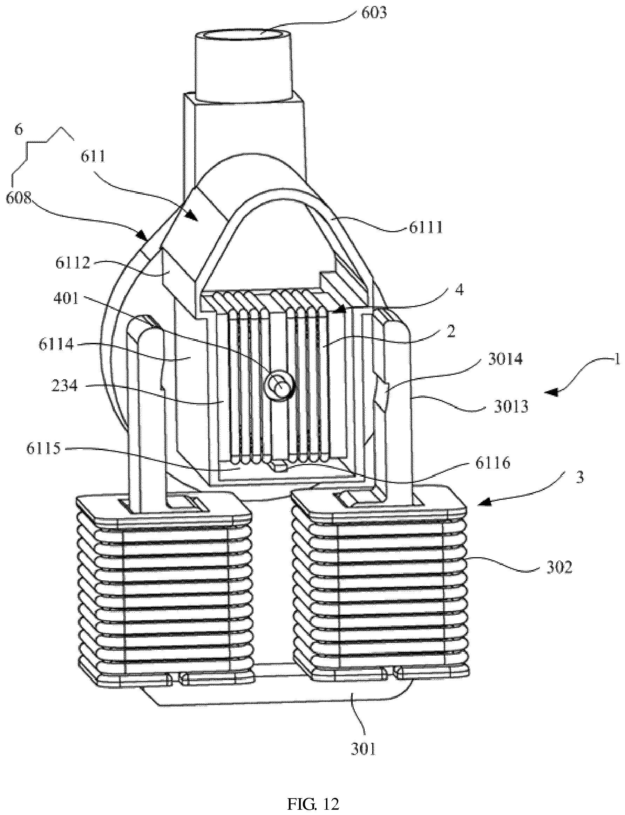

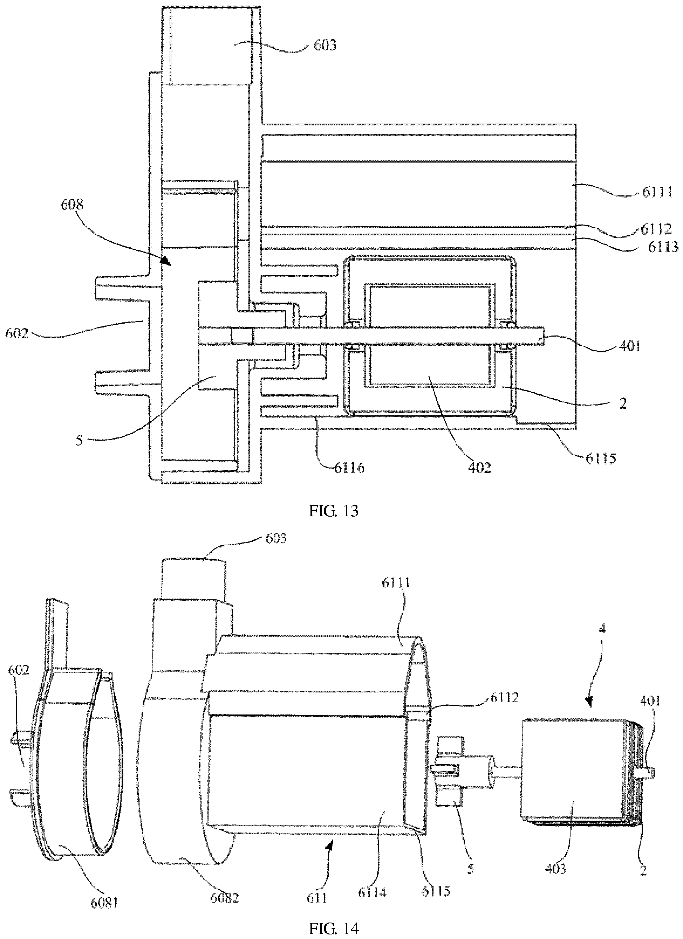

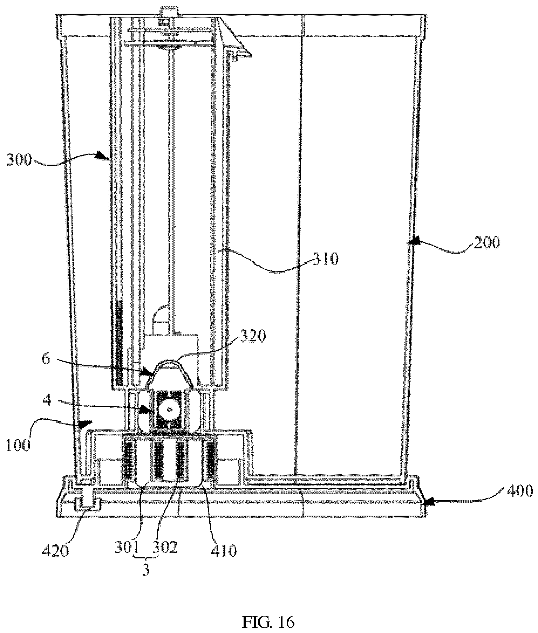

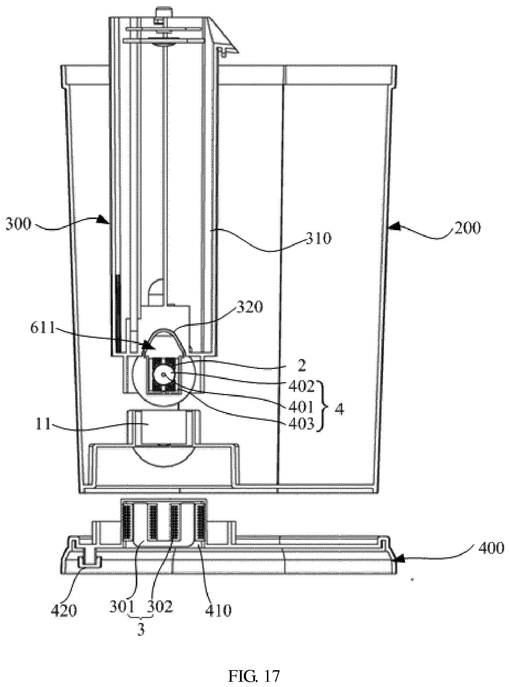

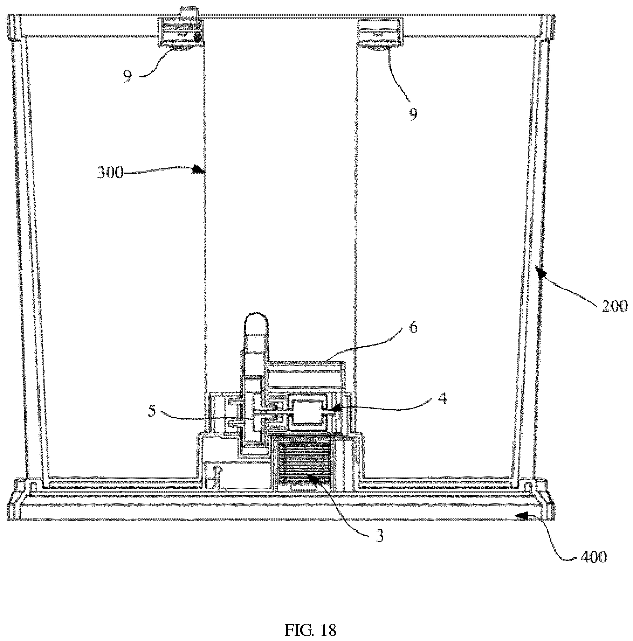

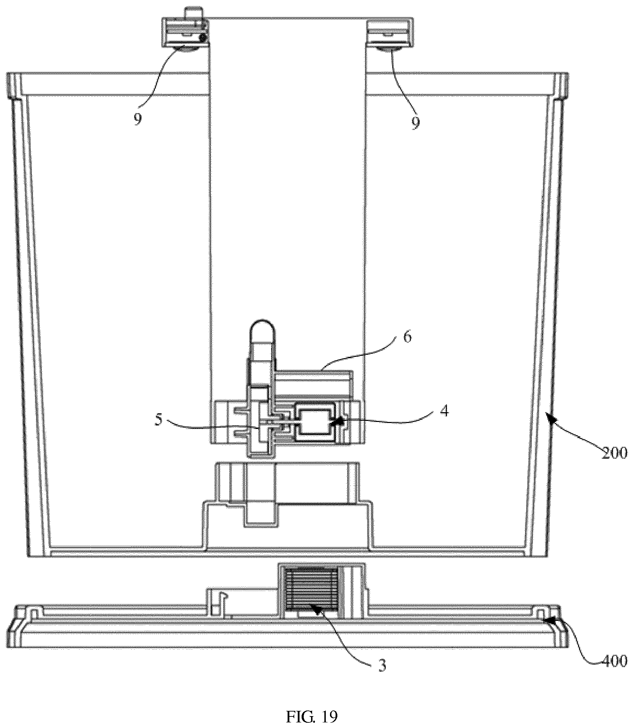

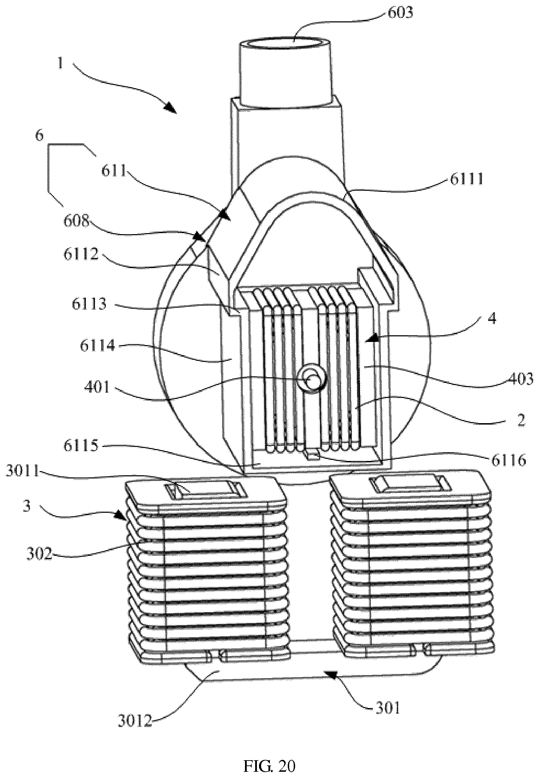

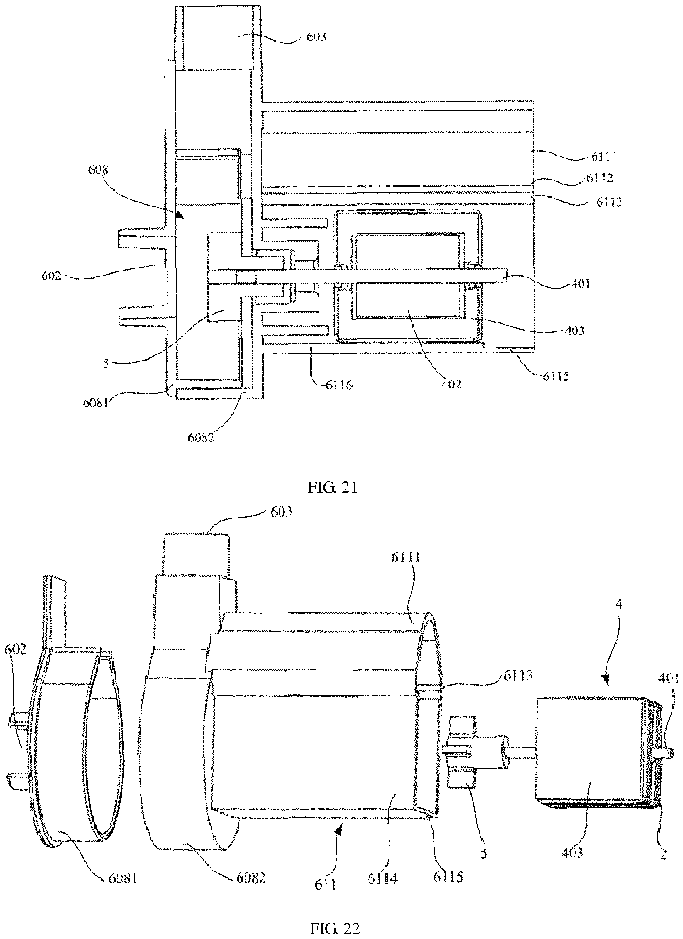

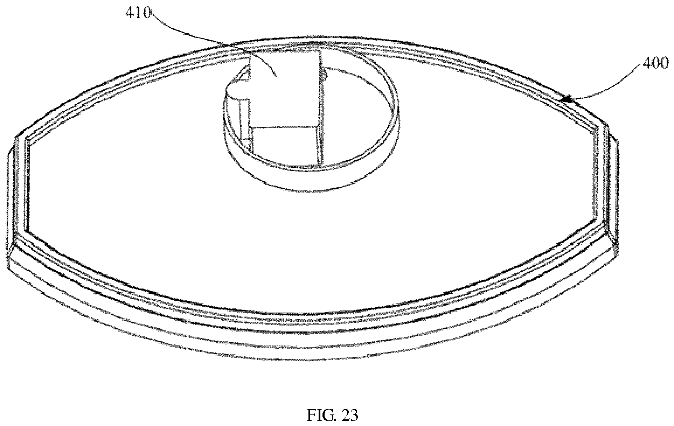

As illustrated in FIGS. 1 to 23, the embodiments provide a water pump 100, which is mainly applied in the aquarium equipment. The aquarium equipment may be an aquarium or a pet water dispenser. In the following embodiments, the aquarium is taken as an example of the aquarium equipment to be mainly described, and the aquarium includes a tank 200 and a power generation apparatus 100 that is operative to pump water to the tank 200 and supply power to the electrical device on the tank 200.

As illustrated in FIGS. 1 to 7, the power generation apparatus 100 in the embodiments includes the water pump 1 and a power generation induction coil 2. The water pump 1 includes a stator 3, a rotor assembly 4 and an impeller 5. The rotor assembly 4 is coupled to the impeller 5. The stator 3 includes a U-shaped iron core and at least one coil winding 302 wound around the U-shaped iron core 301. The coil winding 302 is operative to be coupled to an external power source. The rotor assembly 4 includes a rotating shaft 401 and a permanent magnet rotor 402 coupled to the rotating shaft 401. The power generation induction coil 2 is wound around an exterior of the permanent magnet rotor 402 and coupled to an electric device. The permanent magnet rotor 402 is disposed at an open end of the U-shaped iron core 301, and in response to the coil winding 302 being energized, the permanent magnet rotor 402 is operative to rotate relative to the power generation induction coil 2 enabling the power generation induction coil 2 to generate an induced current to power up the electric device. The power generation induction coil 2 is disposed at the exterior of the permanent magnet rotor 402 and the permanent magnet rotor 402 is disposed at the open end of the U-shaped iron core 301, an alternating magnetic field is generated when an alternating current is input into the coil winding 302 of the stator 3, so that the permanent magnet rotor 402 rotates relative to the stator 3 and the power generation induction coil 2. Meanwhile, the permanent magnet rotor 402 drives the impeller 5 to rotate, thereby generating a centrifugal force to achieve the purpose of water pumping of the water pump 1. Since the permanent magnet rotor 402 continues to rotate and a magnetic field lines of the permanent magnet rotor 402 cuts the power generation induction coil 2 disposed at the exterior of the permanent magnet rotor 402, the power generation induction coil 2 generates an induced current by which to power up the electric device.

Experiments have proved that it is totally feasible to power up other low-power electrical devices with the power supply mode according to the embodiment disclosed herein as long as the water pump 1 has sufficient power.

In an embodiment, the power generation apparatus 100 is an integral structure and is operative to be integrally disposed in a tank of the aquarium.

The power generation apparatus 100 further includes a housing 6 in which the stator 3, the rotor assembly 4 and the impeller are all installed.

The permanent magnet rotor 402 is operative to be directly coupled to the impeller 5, and also to be coupled to the impeller 5 by the rotating shaft 401 as long as the permanent magnet rotor 402 is operative to drive the impeller 5 to rotate together while the permanent magnet rotor 402 is rotating.

The U-shaped iron core 301 includes two first iron cores 3011 arranged in parallel and a second iron core 3012 connected to one end of the first iron cores 3011. The two first iron cores 3011 are each wound with the coil winding 302, and the end of each of the first iron cores 3011 facing away from the second iron core 3012 protrudes out of a side face of the coil winding 302 that is adjacent to the rotor assembly 4 to form an iron core protrusion 3013. The permanent magnet rotor 402 and the power generation induction coil 2 are disposed between two iron core protrusions 3013. The side of each of the two iron core protrusions 3013 that faces towards the permanent magnet rotor 402 defines a notch 3014. Each notch 3014 is provided with a sloping surface. The sloping direction of two sloping surfaces is opposite to each other. Two notches 3014 are spaced apart from each other along a length of the iron core protrusions 3013, or the two notches 3014 are staggered along the length of the iron core protrusions 3013.The alternating magnetic field generated by the coil winding 302 is transmitted to the notches 3014 (starting angles) along the U-shaped iron core 301 (silicon steel sheet). The magnetic field is uneven due to the presence of the notches 104, thereby enabling the permanent magnet rotor 402 of the water pump 1 to rotate.

A rotor chamber 601 for receiving the rotor assembly 4 is provided in the housing 6. The rotor assembly 4 further includes a reel 403, which is disposed in the rotor chamber 601 and fixed outside the permanent magnet rotor 402. The reel 403 is clearance-fitted to the permanent magnet rotor 402.

An axis of the permanent magnet rotor 402 is parallel to a winding plane of the power generation induction coil 2, so that the magnetic flux density of the alternating magnetic field passing through the power generation induction coil 2 can be the maximum, thereby generating a relatively large induced current.

The power generation induction coil 2 includes a first power generation induction coil and a second power generation induction coil spaced apart from each other and coupled to each other. The winding plane of the first power generation induction coil runs parallel to the winding plane of the second power generation induction coil, and the first power generation induction coil and the second power generation induction coil are symmetrically disposed relative to the axis of the permanent magnet rotor, which can improve the power supply efficiency and power generation efficiency of the power generation induction coil 2.

To facilitate fixing the power generation apparatus 100 in the tank of the aquarium, an outer side of one of side walls of the housing 6 is provided at intervals with multiple suction plates 7 or a mounting base by which the power generation apparatus 100 is operative to be selectively fixed in the tank of the aquarium.

The housing 6 is provided with a water inlet 602 and a water outlet 603, and the outer side of a side wall of the housing 6 that is not provided with the water inlet 602 or the water outlet 603 is provided at intervals with the multiple suction plates 7.

The housing 6 includes a housing body 604, a first cover body 605 and a second cover body 606. The housing body 604 is provided with two openings disposed opposite to each other. The two openings are disposed at two ends of the housing body 604. The first cover body 605 and the second cover body 606 respectively block the two openings. A stator chamber 607, the rotor chamber 601 and a pump house 608 are disposed in the housing body 604. The rotor chamber 601 is disposed between the pump house 608 and the stator chamber 607. The pump house 608 and the stator chamber 607 are respectively disposed at the two ends of the housing body 604. The first cover body 605 blocks an end provided with the stator chamber 607 of the housing body 604, the stator chamber 607 is in a sealed state. The second cover body 606 blocks an end provided with the pump house 608 of the housing body 604, a pump house cover 6081 blocking the pump house 608 is disposed at an end of the second cover body 606 adjacent to the pump house, and a water passing hole is disposed on the pump house cover 6081.

A part of the stator chamber 607 extends to two opposite sides of the rotor chamber 601 and forms an iron core receiving chamber, and both the stator chamber 607 and the iron core receiving chamber are not communicated with the rotor chamber 601. The stator 3 is disposed in the stator chamber, two iron core protrusions 3013 of the U-shaped iron core of the stator 3 are disposed in the iron core receiving chamber. The rotor assembly 4 is disposed in the rotor chamber 601. The rotor chamber 601 is spaced apart from the pump house 608 by a partition 609. A through hole is defined in the partition 609 for the rotating shaft 401 of the rotor assembly 4 to pass through. The impeller 5 is disposed in the pump house 608.

The water outlet 603 is defined in a top of the housing 6 and is communicated with the pump house 608. A water outlet tube 610 is inserted on the water outlet 603. The water passing hole on the pump house cover 6081 directly faces the impeller 5. The water inlet 602 is disposed on the second cover body 606 and directly faces the water passing hole. A bottom of the housing body 604 is provided with two suction plates 7.

The first cover body 605 of the housing 6 is provided with a cable passing hole for a power cable 8 to pass through. One end of the power cable 8 is operative to be coupled to the external power source, other end of the power cable 8 is coupled to the coil winding 302 of the stator 3. The electric device includes a lamp 9 which is mounted on the side wall of the housing 6 or is spaced apart from the water pump 1.

Typically, the lamp 9 is mounted on the outer side of the side wall of the housing 6 that is not provided with the suction plate 7 or the mounting base. As illustrated in FIG. 1, the lamp 9 is disposed on the first cover body 605.

The lamp 9 includes a light emitting diode (LED) and a sealing cover that seals and mounts the LED onto the housing 6, enabling the lamp 9 to have a desirable waterproof performance. The sealing cover has a light-transmitting region through which light of the LED is transmitted.

In one embodiment, referring to FIG. 1 to 7, this embodiment differs from the above embodiment in that: the coil winding 302 is disposed adjacent to both ends of the U-shaped iron core 301 along a length thereof. The permanent magnet rotor 402 is disposed outside the stator 3. The coil winding 302 is also operative to be coupled to the alternating current so that the power generation induction coil 2 is operative to generate the induced current.

Two end faces of the U-shaped iron core 301 along the length is flush with a side surface of the coil winding 302 adjacent to the rotor assembly 4.

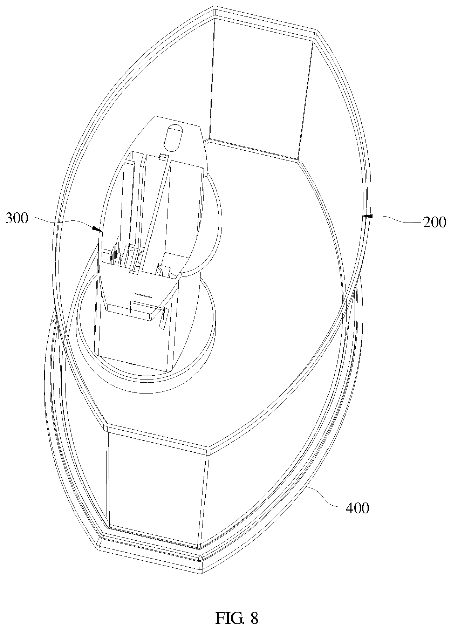

In one embodiment, as illustrated in FIGS. 8 to 14, in this embodiment, a part of a power generation apparatus 100 is disposed in a tank 200 of the aquarium, and a part of the power generation apparatus 100 is disposed outside the tank 200 of the aquarium.

As illustrated in FIGS. 8 to 14, a water pump 1 of the power generation apparatus 100 further includes a housing 6, a stator chamber 607, and a rotor chamber 601. The rotor chamber 601 is disposed in the housing 6. A pump house 608 communicated with the rotor chamber 601 is further disposed in the housing 6. A rotor assembly 4 is disposed in the rotor chamber 601. An impeller 5 is disposed in the pump house 608. The housing 6 is provided with a water inlet 602 and a water outlet 603, and the water inlet 602 and the water outlet 603 are communicated with the pump house 608. The stator chamber 607 is defined in the tank 200 of the aquarium. A wall of the tank 200 is recessed inward the tank 200 to define the stator chamber 607. The stator chamber 607 is not communicated with an interior of the tank 200. The housing 6 is detachably disposed in the tank 200 and corresponds to the stator chamber 607 in position.

The stator chamber 607 includes an annular first side wall and a first bottom wall. The first bottom wall is recessed inward the tank 200to define two iron core receiving chambers 612. Each of both ends of the U-shaped iron core 301 that protrude out of a coil winding 302 is an iron core protrusion 3013, where the iron core protrusions are inserted into the two iron core receiving chambers 612.

In this embodiment, a notch 3014 is defined in an inner side of each one of the two iron core protrusion portions 3013 . Each notch 3014 is provided with a sloping surface. The two notches 3014 are disposed up and down and spaced apart from each other, and the sloping surface of one notch 3014 inclines upwards, the sloping surface of the other notch 3014 inclines downwards. A receiving slot 210 is formed in the tank 200 and between the two iron core receiving chambers 612. The impeller 5 is fixedly coupled to a permanent magnet rotor 402 in the receiving slot 210 by a rotating shaft 401. A power generation induction coil 2 is wound around an exterior of the permanent magnet rotor 402 and coupled to an electric device. The permanent magnet rotor 402 is operative to rotate relative to the power generation induction coil 2. In this embodiment, when an alternating current is input into the coil winding 302 of the stator 3, an alternating magnetic field is generated. The alternating magnetic field is transmitted to the notch 3014 (a starting angle) along the U-shaped iron core 301 (a silicon steel sheet). Due to the presence of the notch 3014, the generated magnetic field would be rendered uneven so that the permanent magnet rotor 402 of the water pump 1 would rotate. Meanwhile, the permanent magnet rotor 402 drives the impeller 5 to rotate thereby generating a centrifugal force. Under the action of the pump house 608, water flows from the water inlet 602 to the water outlet 603, thus realizing the purpose of water pumping of the water pump 1. Since the permanent magnet rotor 402 continues to rotate and magnetic field lines of the permanent magnet rotor 402 cuts the power generation induction coil 2 disposed at the exterior of the permanent magnet rotor 402, thereby enabling the power generation induction coil 2 to generate an induced current. The induced current generated by the power generation induction coil 2 is drawn to power up the electric device (a low-power device).

In this embodiment, each of the notches 3014 has two faces. One of the two faces is the slope described above, and the other face is a plane which is parallel to the bottom of the stator 3. An angle is formed between the plane and the slope and is called the starting angle for starting the rotation of the permanent magnet rotor 402.

Compared with the related art, this embodiment can avoid safety hazards such as electric leakage which may occur when the electric device in the tank 200 is powered up using the power supply device alone.

Experiments prove that it is completely feasible to power up other low-power electrical devices in the power supply mode of the embodiment as long as the water pump 1 has sufficient power. The electrical devices in the tank 200 in this embodiment are all low-power devices and are operative to be powered up by the power generation induction coil 2 of the permanent magnet rotor 402.

The power generation induction coil 2 is wound along an axis of the rotating shaft 401, that is, a central line of the power generation induction coil 2 is vertical to the rotating shaft 401, so that a magnetic flux density of the alternating magnetic field passing through the power generation induction coil 2 can be the maximum, thereby generating a relatively large induced current.

The power generation induction coil 2 includes a first power generation induction coil and a second power generation induction coil spaced apart from each other and coupled to each other. The rotating shaft 401 is disposed between the first power generation induction coil and the second power generation induction coil. Specifically, the first power generation induction coil and the second power generation induction coil are symmetrically disposed relative to an outer circumference of the permanent magnet rotor 402, which can improve the power supply efficiency and power generation efficiency of the power generation induction coil 2.

In this embodiment, the electric device includes a lamp 9. A filter 300 is detachably mounted in the tank 200 and disposed at a bottom of the tank 200. The lamp 9 is mounted on the filter 300. The housing 6 is detachably fixed to a lower end of the filter 300, and correspondingly, and the stator chamber 607 is located at the bottom of the tank 200.The lamp 9 is powered up by the power generation induction coil 2. When cleaning the filter 300, the filter 300, the rotor assembly 4 as well as the impeller 5 can be moved outside the tank 200 and cleaned altogether. Because the lamp 9 need not be powered off before the removal, this facilitates the cleaning and maintenance of the aquarium.

The lower end of a filter housing 310 of the filter 300 is inserted and fitted with an outer side wall of the stator chamber 607, which facilitates the disassembling or assembling of the filter 300. The bottom of the filter 300 is recessed inward to define a mounting slot 320. The housing 6 is clamped and fixed in the mounting slot 320, which facilitates mounting the housing mounted with the rotor assembly 4 and the impeller 5 to the bottom of the filter 300.When the filter 300 is moved outside the housing 200, the housing 6 mounted with the rotor assembly 4 and the impeller 5 can be directly removed together.

The housing 6 includes the pump house 608 for mounting the impeller 5 and a mounting housing 611 coupled to the pump house 608. An end of the mounting housing 611 coupled to the mounting slot 320 is disposed as an arc-shaped structure 6111 that matches the structure of the mounting slot 320. Each one of two ends of the arc-shaped structure 6111 extends with a connecting portion 6112, which is parallel to each other. An end of the connecting portion 6112 facing away from the arc-shaped structure 6111 is vertically coupled to a bent portion 6113. An end of the bent portion 6113 facing away from the connecting portion 6112 is vertically coupled to a side wall of the housing 6114 provided with the mounting housing 611. An end of each one of two side walls of the housing 6114 facing away from the bent portion 6113 is coupled to each other by a bottom wall of the housing 6115. The arc-shaped structure 6111, the connecting portion 6112, the bent portion 6113, the side wall of the housing 6114 and the bottom wall of the housing 6115 are enclosed into the rotor chamber 601 capable of holding the rotor assembly 4. A clamping protrusion (not shown in the figure) protrudes on an inner wall and at the slot opening of the mounting slot 320. When the arc-shaped structure 6111 of a mount housing 611 is inserted into the mounting slot 320, the connecting portion 6112 abuts against a slot wall of the mounting slot 320, the bent portion 6113 abuts against one side of the clamping protrusion adjacent to the inside of the mounting slot 320, and an end face of an end of the clamping protrusion facing away from the inside of the mounting slot 320 abuts against the side wall of the housing 6114.

To facilitating fixing the power generation induction coil 2, the rotor assembly 4 further includes a reel 403. The power generation induction coil 2 is wound around the reel 403, which is potted and fixed in the mount housing 611 by epoxy resin. The reel 403 has a chamber for holding the permanent magnet rotor 402. An inner wall of the chamber is clearance-fitted to the permanent magnet rotor 402. Each one of two opposite side walls of the reel 403 is provided with a shaft hole in which a bearing block is mounted. The rotating shaft 401 is inserted and fixed to the bearing block.

Typically, the bottom wall of the housing 6115 of the mount housing 611 is provided with a protrusion 6116 that faces towards the mount housing 611, a length of the protrusion 6116 extends along a length direction of the rotating shaft 401. The reel 403 is disposed on the protrusion 6116. The epoxy resin can seal the power generation induction coil 2 on the reel 403 and extend to the bottom of the reel 403, after the epoxy resin is cured, the reel 403 is fixed in the mount housing 611.

Furthermore, the aquarium in this embodiment further includes a base seat 400. The stator 3 is fixed to the base seat 400, and the tank 200 is detachably mounted on the base seat 400. Specifically, the stator 2 is secured to the base seat 400 by epoxy resin injection molding. Mounting the tank 200 on the base seat 400 means mounting the permanent magnet rotor 402 and the power generation induction coil 2 between the two iron core protrusion portions 3013 of the stator 3, which facilitates the disassembling or assembling.

The pump house 608 includes a pump house body 6082 and a pump house cover 6081 that are detachably connected to each other, which facilitates disassembling, assembling and cleaning the impeller. The water inlet 602 is defined in the pump house cover 6081. An axis of the water inlet 602 coincides with an axis of the impeller. A side wall of the pump house body 6082 facing away from the pump house cover 6081 is provided with a first through hole. A side wall of the mount housing 611 adjacent to the pump house 608 is provided with a second through hole. The rotating shaft 401 passes through the first through hole and the second through hole, and is coupled to the impeller 5 in the pump house body 6082. An upper end of the pump house 608 is provided with the water outlet 603 communicated with the water outlet tube 610.

Specifically, an outer side of a side wall of the pump house body 6082 facing away from the pump house cover 6081 is provided with a positioning slot. The bottom of the positioning slot is defined the first through hole to facilitate positioning and mounting the impeller 5.

Specifically, an inner wall of the side wall of the mount housing 611 adjacent to the pump house 608 is provided with a connecting pillar. The connecting pillar along its axis is defined a stepped hole inserted and fitted with an outside of the positioning slot. An outside of the connecting pillar is provided with an axis positioning ring on a circumference. The axis positioning ring is spaced apart from the connecting pillar, thereby facilitating the axis positioning before the rotor assembly is mounted.

In this embodiment, the base 400 is recessed towards the tank 200 to define a stator isolation chamber 410. The stator isolation chamber 410 has the same structure and size with the stator 3. The stator 3 is disposed in the stator isolation chamber 410 and is potted and fixed in the base 400 by the epoxy resin.

A cable slot is disposed on the base 400. The bottom of the base 400 is provided with a wire securing clip 420 communicated with the cable slot for fixing a cable lead out from the base and coupled to the coil winding 302 of the stator 3.

In this embodiment, the aquarium further includes a tank cover (not shown in the figure) which is detachably mounted on the upper end of the tank 200.

In this embodiment, the tank 200 of the aquarium further includes a drive circuit for providing a low-voltage direct current power source and a voltage change and controlling turning on and off of the electric device.

In this embodiment, the lamp 9 may be a light emitting diode (LED) lamp, which is disposed on the upper end of the filter 300 and can adjust the brightness as well as the light color of the LED lamp by the drive circuit.

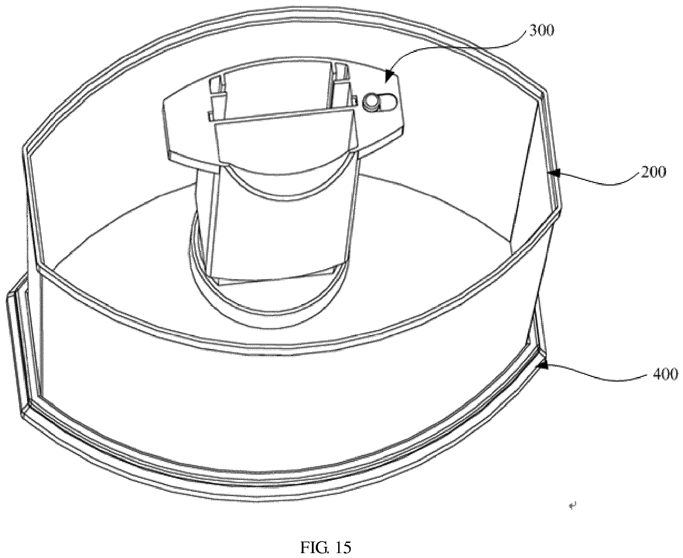

In one embodiment, as illustrated in FIGS. 15 to 23, this embodiment is similar to the above-mentioned embodiment in that a part of a power generation apparatus 100 is disposed in a tank 200 of the aquarium, and a part of the power generation apparatus 100 is disposed outside the tank 200 of the aquarium. This embodiment differs from the above embodiment in that: the structure of the stator 3 is different. Specifically, a U-shaped iron core 301 of the stator 2 includes two first iron cores 3011 arranged in parallel and a second iron core 3012 coupled to one end of each of the two first iron cores 3011. The two first iron cores 3011 are each wound with the coil winding 302, and an end face of the end of each of the first iron cores 3011 facing away from the second iron core 3012 is adjacent to or is flush with a side face of the coil winding 302 that is adjacent to the rotor assembly 4. The permanent magnet rotor 402 and the power generation induction coil 2 are disposed outside the open end of the U-shaped iron core 301.An end face of the U-shaped iron core 301 along the length direction is designed to be adjacent to or flush with the side face of the rotor assembly 4. That is, an end disposed at the open end of the U-shaped iron core 301 is slightly extended or is directly parallel to the side face of the coil winding 302, so that one side face of the stator 3 adjacent to the rotor assembly 4 is operative to be disposed close to a stator chamber 607 to reduce a distance between the permanent magnet rotor 402 and the coil winding 302 of the stator and improve the power generation efficiency of the power generation apparatus 100.

In this embodiment, the power apparatus 100 includes a water pump 1. The water pump 1 includes a housing 6, a stator 3, a rotor assembly 4 and an impeller 5 which are installed in the housing 6. The housing 6 is disposed in the tank 200. A outer wall of the tank 200 is recessed to define the stator chamber 607 that faces towards the tank 200. The stator 3 is disposed in the stator chamber 607. The rotor assembly 4 is disposed at the exterior of the U-shaped iron core 301 and the open end of the U-shaped iron core 301 faces towards the rotor assembly 4. The rotor assembly 4 includes a rotating shaft 401 and a permanent magnet rotor 402 coupled to the rotating shaft 401. The power generation induction coil 2 is wound around an exterior of the permanent magnet rotor 402. The impeller 5 is fixedly coupled to the permanent magnet rotor 402 by the rotating shaft 401 or directly and fixedly coupled to the permanent magnet rotor 402. The power generation induction coil 2 is coupled to the electric device. The permanent magnet rotor 402 rotates relative to the power generation induction coil 2. In this embodiment, when an alternating current is input into the coil winding 302 of the stator 3, an alternating magnetic field is generated and the permanent magnet rotor 402 of the water pump 1 is enabled to rotate. Meanwhile, the permanent magnet rotor 402 drives the impeller 5 to rotate, thereby generating a centrifugal force to achieve the purpose of water pumping of the water pump 1. Since the permanent magnet rotor 402 continues to rotate and magnetic field lines of the permanent magnet rotor 402 cut the power generation induction coil 2 disposed at the exterior of the permanent magnet rotor 402, so that the power generation induction coil 2 generates an induced current by which to power up the electric device (a low-power device).

Compared with the related art, this embodiment can avoid safety hazards such as electric leakage which may occur when the electric device in the tank 200 is powered up by using the power supply device alone.

Experiments prove that it is completely feasible to supply power to other low-power electrical devices in the power supply mode of the embodiment as long as the water pump 1 has sufficient power.

An axis of the permanent magnet rotor 402 runs parallel to a winding plane of the power generation induction coil 2, so that the magnetic flux density of the alternating magnetic field passing through the power generation induction coil 2 can be the maximum, thereby generating a relatively large induced current.

The axis of the permanent magnet rotor 402 is vertical to a U-shaped plane of the U-shaped iron core 301 and the permanent magnet rotor 402 is disposed at a middle line between the two first iron cores 3011, so that the axis of the permanent magnet rotor 402 parallels to the coil winding 302 to further improve the induced current generated by the power generation induction coil 2.

The power generation induction coil 2 includes a first power generation induction coil and a second power generation induction coil spaced apart from each other and coupled to each other. A winding plane of the first power generation induction coil run parallel to a winding plane of the second power generation induction coil, and the first power generation induction coil and the second power generation induction coil are symmetrically disposed relative to the axis of the permanent magnet rotor 402, which can improve the power supply efficiency and power generation efficiency of the power generation induction coil 2.

In this embodiment, the electric device includes a lamp 9. A filter 300 is detachably mounted in the tank 200 and disposed at a bottom of the tank 200. The lamp 9 is mounted on the filter 300. The housing 6 is detachably fixed to a lower end of the filter 300, and correspondingly, and the stator chamber 607 is located at the bottom of the tank 200. Specifically, the lamp 9 is powered up by the power generation induction coil 2. When cleaning the filter 300, the filter 300, the rotor assembly 4 as well as the impeller 5 can be moved outside the tank 200 and cleaned altogether. Because the lamp 9 need not be powered off before the removal, this facilitates the cleaning and maintenance of the aquarium.

The lower end of a filter housing 310 of the filter 300 is insertively fitted with an outer side wall of the stator chamber 607, which facilitates the disassembling or assembling of the filter 300. The bottom of the filter 300 is provided with a mounting slot 320 that faces towards the filter 300. The housing 6 is clamped and fixed in the mounting slot 320, which facilitates mounting the housing mounted with the rotor assembly 4 and the impeller 5 to the bottom of the filter 300.When the filter 300 is moved outside the housing 200, the housing 6 mounted with the rotor assembly 4 and the impeller 5 can be directly removed together.

In this embodiment, the housing 6 includes the pump house 608 for mounting the impeller 5 and a mounting housing 611 coupled to the pump house 608. An end of the mounting housing 611 coupled to the mounting slot 320 is disposed as an arc-shaped structure 6111 matched with the structure of the mounting slot 320. Each one of two ends of the arc-shaped structure 6111 extends with a connecting portion 6112, which is parallel to each other. An end of the connecting portion 6112 facing away from the arc-shaped structure 6111 is vertically coupled to a bent portion 6113. An end of the bent portion 6113 facing away from the connecting portion 6112 is vertically coupled to a side wall of the housing 6114 provided with the mounting housing 611. An end of each one of two side walls of the housing 6114 facing away from the bent portion 6113 is coupled to each other by a bottom wall of the housing 6115. The arc-shaped structure 6111, the connecting portion 6112, the bent portion 6113, the side wall of the housing 6114 and the bottom wall of the housing 6115 are enclosed into the rotor chamber 601 capable of holding the rotor assembly 4. A clamping protrusion protrudes on an inner wall and at the slot opening of the mounting slot 320. When the arc-shaped structure 6111 of a mount housing 611 is inserted into the mounting slot 320, the connecting portion 6112 abuts against a slot wall of the mounting slot 320, the bent portion 6113 abuts against one side of the clamping protrusion adjacent to the inside of the mounting slot 320, and an end face of an end of the clamping protrusion facing away from the inside of the mounting slot 320 abuts against the side wall of the housing 6114.

To facilitating fixing the power generation induction coil 2, the rotor assembly 4 further includes a reel 403. The power generation induction coil 2 is wound around the reel 403, which is further potted and fixed in the mount housing 611 by the epoxy resin. The reel 403 has a chamber for holding the permanent magnet rotor 402. An inner wall of the chamber is clearance-fitted to the permanent magnet rotor 402. Each one of two opposite side walls of the reel 403 is provided with a shaft hole in which a bearing block is mounted. The rotating shaft 401 is inserted and fixed to the bearing block.

The bottom wall of the housing 6115 of the mount housing 611 is provided with a protrusion 6116 that faces towards the mount housing 611, a length of the protrusion 6116 extends along a length of the rotating shaft 401. The reel 403 is disposed on the protrusion 6116. The epoxy resin is operative to seal the power generation induction coil 2 on the reel 403 and extends to the bottom of the reel 403. After the epoxy resin is cured, the reel 403 is fixed in the mount housing 611.

The aquarium in this embodiment further includes a base seat 400. The stator 3 is fixed to the base 400, and the tank 200 is detachably mounted on the base seat 400. Specifically, the stator 3 is secured to the base seat 400 by epoxy resin injection molding, which facilitates the disassembling or assembling and has a good sealing effect.

The pump house 608 includes a pump house body 6082 and a pump house cover 6081 that are detachably connected to each other, which facilitates disassembling, assembling and cleaning the impeller. The water inlet 602 is disposed on the pump house cover 6081. An axis of the water inlet 602 coincides with an axis of the impeller. A side wall of the pump house body 6082 facing away from the pump house cover 6081 is provided with a first through hole. A side wall of the mount housing 611 adjacent to the pump house 608 is provided with a second through hole. The rotating shaft 401 passes through the first through hole and the second through hole, and is coupled to the impeller 5 in the pump house body 6082. An upper end of the pump house 608 is provided with the water outlet 603 communicated with the water outlet tube 610.

Specifically, an outer side of the side wall of the pump house body 6082 facing away from the pump house cover 6081 is provided with a positioning slot. The bottom of the positioning slot is defined the first through hole to facilitate positioning and mounting the impeller 5.

Specifically, an inner wall of the side wall of the mount housing 611 adjacent to the pump house 608 is provided with a connecting pillar. The connecting pillar along its axis is defined a stepped hole insertively fitted with an outside of the positioning slot. An outside of the connecting pillar is provided with an axis positioning ring on a circumference. The axis positioning ring is spaced apart from the connecting pillar, thereby facilitating the axis positioning before the rotor assembly is mounted.

In this embodiment, the base seat 400 is recessed towards the tank 200 to define a stator isolation chamber 410. The stator 3 is disposed in the stator isolation chamber 410 and is potted and fixed in the base 400 by the epoxy resin.

The base 400 is further provided with a wire securing clip 420 for fixing a cable coupled to the coil winding 302 of the stator 3.

In this embodiment, the tank 200 of the aquarium further includes a drive circuit for providing a low-voltage direct current power source and a voltage change and controlling turning on and off of the electric device.

In this embodiment, the lamp 9 may be a light emitting diode (LED) lamp, which is disposed on the upper end of the filter 300 and can adjust the brightness as well as the light color of the LED lamp by the drive circuit.

## Claims

1. A power generation apparatus (100), comprising a water pump (1) and a power generation induction coil (2), wherein the water pump (1) comprises a stator (3), a rotor assembly (4), and an impeller (5), wherein the rotor assembly (4) is coupled to the impeller (5), the stator (3) comprises a U-shaped iron core (301) and a coil winding (302) wound around the U-shaped iron core (301), wherein the coil winding (302) is operative to be coupled to an external power source, the rotor assembly (4) comprises a rotating shaft (401) and a permanent magnet rotor (402) coupled to the rotating shaft (401), the power generation induction coil (2) is wound around an exterior of the permanent magnet rotor (402) and coupled to an electric device, the permanent magnet rotor (402) is disposed at an open end of the U-shaped iron core (301), and in response to the coil winding (302) being energized, the permanent magnet rotor (402) is operative to rotate relative to the power generation induction coil (2) enabling the power generation induction coil (2) to generate an induced current to power up the electric device.

2. The power generation apparatus (100) according to claim 1, wherein the water pump (1) further comprises a housing (6) in which the stator (3), the rotor assembly (4), and the impeller (5) are mounted.

3. The power generation apparatus (100) according to claim 2, wherein the housing (6) is provided with a stator chamber (607), a rotor chamber (601), and a pump house (608), wherein the stator chamber (607) is isolated from the rotor chamber (601), the stator (3) is disposed in the stator chamber (607), the rotor chamber (601) is communicated with the pump house (608), the rotor assembly (4) is disposed in the rotor chamber (601), the impeller (5) is disposed in the pump house (608), the housing (6) is provided with a water inlet (602) and a water outlet (603), wherein the water inlet (602) and the water outlet (603) are communicated with the pump house (608).

4. The power generation apparatus (100) according to claim 1, wherein the water pump (1) comprises a housing (6), a stator chamber (607) and a rotor chamber (601), the rotor chamber (601) is defined in the housing (6), the housing (6) further defines a pump house (608) communicated with the rotor chamber (601), the rotor assembly (4) is disposed in the rotor chamber (601), the impeller (5) is disposed in the pump house (608), the housing (6) is provided with a water inlet (602) and a water outlet (603), wherein the water inlet (602) and the water outlet (603) are communicated with the pump house (608); and
the stator chamber (607) is defined in a tank (200) of an aquarium equipment, a wall of the tank (200) is recessed inward the tank (200) to define the stator chamber (607), the stator chamber (607) is not communicated with an interior of the tank (200), the housing (6) is detachably disposed in the tank (200) and corresponds to the stator chamber (607) in position.

5. The power generation apparatus (100) according to claim 4, wherein the stator chamber (607) comprises an annular first side wall (6114) and a first bottom wall (6115), the first bottom wall (6115) is recessed inward the tank (200) to define two iron core receiving chambers (612), each of both ends of the U-shaped iron core (301) that protrude out of the coil winding (302) is an iron core protrusion (3013), wherein the iron core protrusions (3013) are inserted into the iron core receiving chambers (612).

6. The power generation apparatus (100) according to claim 1, wherein the U-shaped iron core (301) comprises two first iron cores (3011) arranged in parallel and a second iron core (3012) connected to one end of each of the two first iron cores (3011), the two first iron cores (3011) are each wound with the coil winding (302), and an end of each of the first iron cores (3011) facing away from the second iron core (3012) protrudes out of a side face of the coil winding (302) that is adjacent to the rotor assembly (4) to form an iron core protrusion (3013), wherein the permanent magnet rotor (402) and the power generation induction coil (2) are disposed between two iron core protrusions (3013).

7. The power generation apparatus (100) according to claim 1, wherein the U-shaped iron core (301) comprises two first iron cores (3011) arranged in parallel and a second iron core (3012) connected to one end of each of the two first iron cores (3011), the two first iron cores (3011) are each wound with the coil winding (302), and an end face of an end of each of the first iron cores (3011) facing away from the second iron core (3012) is adjacent to or flush with a side face of the coil winding (302) that is adjacent to the rotor assembly (4), wherein the permanent magnet rotor (402) and the power generation induction coil (2) are disposed outside the open end of the U-shaped iron core (301).

8. The power generation apparatus (100) according to claim 1, wherein an axis of the permanent magnet rotor (402) is parallel to a winding plane of the power generation induction coil (2).

9. The power generation apparatus (100) according to claim 8, wherein the power generation induction coil (2) comprises a first power generation induction coil (2) and a second power generation induction coil (2) that are spaced apart from each other, the winding plane of the first power generation induction coil (2) runs parallel to the winding plane of the second power generation induction coil (2), and the first power generation induction coil (2) and the second power generation induction coil (2) are symmetrically disposed relative to the axis of the permanent magnet rotor (402).

10. The power generation apparatus (100) according to claim 1, wherein the water pump (1) comprises a housing (6), the electric device comprises a lamp (9) fixed to the housing (6); or the lamp (9) and the water pump (1) are spaced apart from each other.

11. An aquarium equipment, comprising the power generation apparatus (100) of any one of claims 1 to 10.

12. The aquarium equipment according to claim 11, wherein the aquarium equipment is an aquarium.

13. The aquarium equipment according to claim 11, further comprising a tank (200), wherein the power generation apparatus (100) is integrally disposed in the tank (200), wherein the water pump (1) of the power generation apparatus (100) comprises a housing (6), and wherein a stator (3), a rotor assembly (4), and an impeller (5) of the power generation apparatus (100) are installed in the housing (6).

14. The aquarium equipment according to claim 11, comprising the tank (200), the power generation apparatus (100) comprises a housing (6), wherein the rotor assembly (4) and the impeller (5) of the power generation apparatus (100) are installed in the housing (6), a wall of the tank (200) is recessed inward the tank (200) to define a stator chamber (607) that is not communicated with an interior of the tank (200), the stator (3) of the power generation apparatus (100) is disposed in the stator chamber (607), the housing (6) is mounted in the tank (200) and corresponds to the stator chamber (607) in position.

15. The aquarium equipment according to claim 14, further comprising a base seat (400) detachably arranged at a bottom of the tank (200), wherein the stator (3) is fixed to the base seat (400).
